# EUROPEAN PATENT APPLICATION

(11) **EP 1 281 677 A1**
(43) Date of publication of application: **05.02.2003**
(21) Application number: 02255198.0
(22) Date of filing: 25.07.2002
(51) Int. Cl.: C02F 9/00

(54) **Domestic water filtration system**

(30) Priority: 26.07.2001 GB 0118260
(71) Applicant: Soda-Club (CO2) AG, 6300 Zug (CH)
(72) Inventor: Roff, Jennifer Claire, St. Neots, Cambridgeshire PE19 5XR (GB); Thomson, Michael Anthony, Peterborough, Cambridgeshire PE6 9EJ (GB); Davies, Paul, Sandy, Bedforshire SG19 1HA (GB); Tanny, Gerald, 76310 Rehovot (IL)
(74) Representative: Lerwill, John

(57) **Abstract**

A domestic water filtration system includes a first water treatment unit (7) with a replaceable ion exchange resin water softener cartridge (15) accommodated in a canister (19) and a second water treatment unit (8) with a replaceable filter cartridge (16) including an activated carbon block (16a) wrapped with a depth filter (22a) and a membrane filter (22b). A flow control device comprising a three way valve (2) has an inlet (12) for connection to the mains water supply and two outlets (13, 14) respectively connected to the inlets of the water treatment units (7, 8) so that rotation of the valve spindle (10) in one direction from an off piston allows water to flow to the inlet (3) of the first treatment unit (7) and in the other direction from the off position allows water to flow to the inlet (5) of the second treatment unit (8). The outlet (4) of the first unit (7) is connected to the inlet of the second unit (6), and the outlet (6) of the second unit is connected to a dispensing spout (9), so that the control valve (2) is selectively operable so that either filtered water or softened and filtered water is discharged at the dispensing spout (9).

## Description

The present invention relates to apparatus for treating water intended for consumption and it is concerned in particular with a domestic water treatment system for filtering water supplied from a mains water supply prior to being discharged at a water dispensing outlet, such as a faucet.

Domestic water filtration systems are used to remove impurities from a supply of impure water. Impurities, such as hardness can be removed using ion exchange resin filters for instance, whereas heavy metals, chlorine, and organic matter can be removed using carbon filters. Microbiological impurities, such as parasitic cysts and bacteria can be removed by submicron mircorporous filters, while viruses require the use of ultrafiltration or reverse osmosis membranes. Some known water purification systems allow the user to select the quality, i.e. grade of purity, of the water dispensed. GB 2280858 discloses a purification system having a water inlet, a number of filters connected in series and valves placed between certain of the filters for allowing different grades of water to be dispensed, namely, drinking water and washing water. To change the type of water produced, the user operates one of two switches located on the filter housings. WO 97/06879 discloses a filter system which includes a ceramic filter and an activated charcoal filter. All the water passes through the ceramic filter, but a selector allows the charcoal filter to be selectively by-passed. In WO 99/32409, a modular water purification system can be selectively assembled bringing together modules appropriate for treatment of the water in the location where it is to be used. An ion exchange module can be included and a timer may be included to generate an alarm when the expected life of the ion exchange resin is reached. A carbon filter is also included. A portable water decontamination unit is disclosed in WO 99/28241 which includes several filters in series including an ion exchange resin filter and a disinfections filter and a carbon polishing filter downstream of the disinfections filter.

It is usual for a domestic water filtration system to include a valve for controlling the flow of water, that is turning on and off the water flow. Generally a valve is situated at or just upstream of the dispensing outlet, so that the filters are in constant communication with the mains supply. This means that when the filters need to be replaced, the mains supply has to be turned off by means of a valve located upstream of the filtration system, which is inconvenient and complicates the replacement procedure.

Most undesirable substances can be removed from drinking water supplied through the water mains by filtering the water, in particular passing the water through an activated carbon filter, located a short distance upstream of the dispensing outlet, e.g. a faucet. However, if the water is to be boiled, such as for making hot beverages it is advantageous for the temporary hardness of the water to be reduced to preclude the build up of scale on kettle elements and the resultant scum which appears on the surface of the boiled water. The temporary hardness can be reduced by passing the water through an ion exchange resin. It is known to provide ion exchange resin and activated carbon filters connected in series in the water flow path, but the useful lifetime of the ion exchange resin tends to be shorter than that of the activated carbon filter with the result that, when the ion exchange resin and the activated carbon filter consist of replaceable cartridges, timing the replacement of the respective cartridges is not straightforward. Thus, unless the ion exchange resin cartridge is several times larger than the activated carbon filter cartridge it requires replacement much more frequently than activated carbon filter cartridge.

Another problem associated with domestic water filtration systems containing activated carbon filters relates to the formation of a biofilm on the inside wall of the plumbing line from the filter housing to the dispense outlet. Since the carbon filter removes chlorine, any microorganisms in the system downstream of the filter are free to multiply. The biofilm thus created on the walls of the tubing is a potential health hazard to persons with immunodeficiencies.

The present invention addresses the drawbacks explained above and in accordance with the present invention there is provided a domestic water filtration system comprising a flow control device with an inlet for connection to a mains water supply and first and second outlets, a first water treatment unit having an inlet connected to the first outlet of the flow control device, a second water treatment unit having an inlet connected to the second outlet of the flow control device and an outlet for connection to a water dispensing means, the first water treatment unit having an outlet connected to deliver water to the second treatment unit, the flow device having an "off" condition in which water is prevented from flowing to either the first or the second outlet, and the flow control device being selectively operable from the off condition to allow water from the mains supply to flow either to the first outlet whereby water passes to the dispensing means after flowing through both the first and second water treatment units, or to the second outlet whereby water passes to the dispensing means after flowing through the second water treatment unit but without flowing through the first treatment unit.

In the water filtration system of the invention the first water treatment unit can include a replaceable water softener, in particular an ion exchange resin cartridge and the second water treatment unit can include a replaceable carbon filter such as a carbon filter cartridge, with the result that by appropriate actuation of the flow control device the user can select either softened and filtered water, e.g. when the water is to be boiled for preparing hot beverages, or filtered only water which is appropriate when the water is to be consumed without being subjected to boiling. Because not all of the water passes through the ion exchange resin cartridge, its lifetime is extended. Furthermore, because the flow control device is located upstream of both treatment units, this device, in its off position, can be relied upon to prevent water flow during cartridge replacement operations and it is unnecessary to close a further valve located upstream of the filtration system. The particular positioning of the flow control device in the system thus ensures that the treatment units are isolated from main line pressure when the system is at rest.

Conveniently the first and/or second water treatment unit comprises a sealed canister and a replaceable cartridge accommodated in the canister. In a preferred system the first and second water treatment units contain respective replaceable cartridges having different predetermined water treatment capacities, the water treatment capacities being selected in accordance with the quality of the mains water to be treated and the predicted ratio of water volumes to flow through the respective water treatment units so that the replaceable cartridge of the first water treatment unit is due for replacement at intervals of not more than half the intervals at which the cartridge of the second water treatment unit is due for replacement.

In a preferred embodiment of the present invention, the outlet of the second water treatment unit is connected to the water dispensing means through a shut off valve operable in unison with the flow control device. The shut off valve is opened when the flow control device is operated to direct water to one of the first and second outlets. The flow control device and the shut off valve can be provided by a common valve assembly having a rotatable control shaft for actuating the valves. This embodiment has the advantage that when the flow control device has been closed any water left in the system will not continue to be dispensed under the pressure of trapped air which may enter the system from the mains. The system is still isolated from the mains supply, however, when the flow control device is closed. In a variation of this embodiment of the invention, the shut off valve is arranged to be closed shortly after the flow control device is adjusted to isolate both first and second outlets from the mains water supply. During the short delay between closure of the flow control device and of the shut off valve, water may continue to be dispensed to reduce the residual pressure trapped in the system when water is not being filtered and discharged.

The foregoing and other preferred features of the invention will be apparent from the following detailed description when read in conjunction with the accompanying drawings, in which
Fig. 1 is a schematic illustration of a first filtration system embodying the invention;
Fig. 2 illustrates a modification of the system shown in Fig. 1;
Fig. 3 is a schematic illustration of a second embodiment of the invention;
Fig. 4 is an exploded perspective view of the valve assembly of the water filtration system shown in Figure 2; and
Fig. 5 is an axial cross-section through the valve assembly shown in Figure 3.

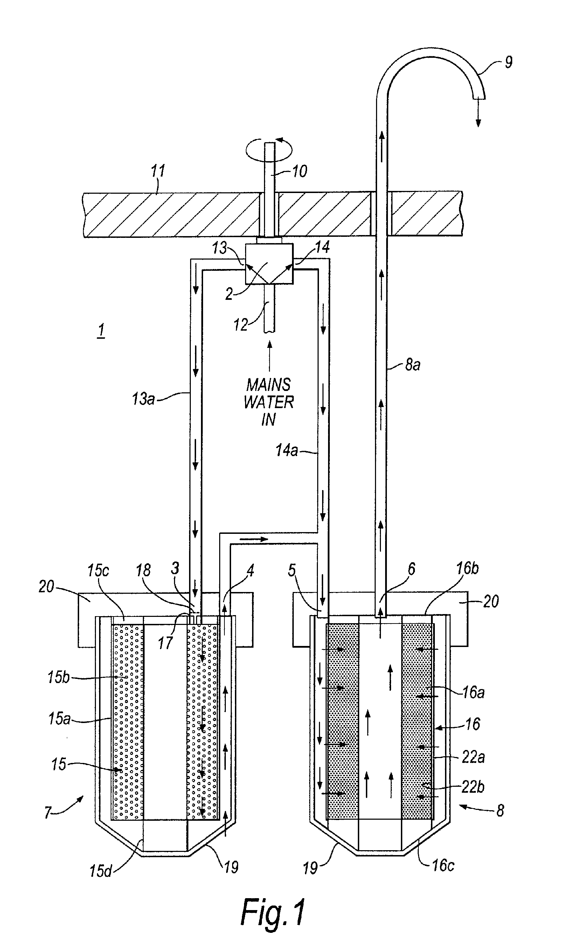

The domestic water filtration system 1 illustrated in Figure 1 comprises a flow control device in the form of a three way valve 2 with a rotatable operating spindle 10. The flow control device has two outlets 13, 14 and an inlet 12 arranged to be connected to a mains supply of cold water. The first outlet 13 is connected by a pipe 13a to the inlet 3 of the first water treatment unit 7 and the second outlet 14 is connected by a pipe 14a to the inlet 5 of the second water treatment unit 8. The outlet 4 of the first water treatment unit 7 is also connected to the pipe 14a a short distance upstream of the inlet 5 of the second water treatment unit 8. The outlet 6 of the second water treatment unit 8 is connected by an exit pipe 8a to a dispensing means 9 in the form of a water discharge spout or faucet. The system 1 is mounted under a domestic worktop 11 with the dispensing spout 9 and a user control knob (not shown) attached to the upper end of the spindle 10 which projects up through the worktop 11, located above the worktop. The spindle 10 is rotatable by means of the operating knob for adjustment of the flow control device to direct mains water to the first outlet 13 or the second outlet 14, or to stop the flow altogether. The spindle is rotated in opposite directions from an off position, in which both outlets 13, 14 are isolated from the inlet 12, to connect the respective outlets 13 and 14 to the inlet 12. Water passing through the first outlet 13 flows to and through the first water treatment unit 7, containing an ion exchange resin cartridge for softening the water. Cartridge 15 is typically comprised of an outer casing 15a, ion exchange resin beads 15b suitable for removal of temporary hardness, water inlet end cap 15c and exit end cap 15d. Its physical dimensions are such that it meets the multiple design considerations required for system operation. Thus, it holds a quantity of a given ion exchange resin which has been determined by trial to be sufficient, for a desired water flow rate, to reduce the temporary hardness to the desired concentration, for a predetermined volume of water of a nominal initial temporary hardness concentration. Integral with water inlet end cap 15c, and positioned in the inlet, is a flow restrictor 17 whose function is to maintain the performance of the ion exchange cartridge by assuring constant water flow rate through cartridge 15 at the above mentioned desired value, independent of the pressure from the mains inlet. In one embodiment, flow restrictor 17 is an orifice of such ratio of diameter to length that the water flow rate is approximately constant at a pressure below that of the mains inlet. Since such fine diameter orifices can be subject to clogging from debris, it may be protected by a small mesh filter 18.

Having passed through the ion exchange resin cartridge, the softened water leaves treatment unit 7 through outlet 4 and enters treatment unit 8 containing filter cartridge 16, which contains one or more filtration elements serially aligned with regard to the direction of flow. In the preferred embodiment of Figure 1, filter cartridge 16 is comprised of a cylindrical porous activated carbon block 16a, whose inner diameter forms a drain tube for filtered water, and water exit end cap 16b and sealing end cap 16c which are integrally glued to the ends of carbon block 16a with an appropriate adhesive such as a hot melt adhesive.

In a further embodiment, the outer diameter of carbon block 16a is wrapped with depth filter media 22a for the purpose of removing particulate and colloidal particles, thereby preventing the build-up of such particles within the pores or on the surface of carbon block 16a, and maintaining the flow rate at the constant value established by flow restrictor 17. Depth filter media 22a may be formed from any of the materials known in the art, such as microfiberglass, polypropylene fibers, and the like. It is wrapped and held in place by adhesive such that substantially all water filtered by carbon block 16a is first filtered by depth filter media 22a.

In a still further embodiment, carbon block 16a is wrapped with a film of 0.2 micron pore size membrane 22b which is integrally sealed to itself along its length and forms an integral seal with the adhesive in ends caps 16b and 16c. Membrane film 22b is in turn wrapped by depth filter media 22a. Thus, water is filtered in serial fashion through cartridge 16 for particulate and colloidal matter, microbiological parasites and bacteria, and dissolved organic molecules and heavy metals. To inhibit the growth of heterotrophic plate count bacteria (HPC) in the carbon filter, the activated carbon block can be further impregnated with bacteria growth inhibitor compounds known in the art, such as silver.

Having passed through the carbon block 16a the softened and filtered water flows through the outlet 6 of the second water treatment unit 8 and to the dispensing spout 9. If, on the other hand, the spindle 10 is rotated so that water flows to the second outlet 14 of the flow control device 2, the mains water is passed directly to the inlet of the second water treatment unit 8 to be filtered by the activated carbon filter cartridge 16 and then delivered, via the outlet 6, to be discharged at the spout 9. Thus this water is filtered by the cartridge 16 only and is not subject to any softening treatment in the ion exchange resin cartridge 15.

Therefore, by selective operation of the valve control knob two types of water can be produced: softened and filtered water, which is suitable for boiling without causing lime scale, and water which is filtered only and suitable for any cold use e.g. drinking. The optional use of the first water treatment unit 7 offers improved efficiency because ion exchange resin softeners generally have approximately one third the lifetime of carbon filters. By the user selecting to soften only water which is to be boiled, the ion exchange resin cartridge requires replacement less often that would be the case if all the water treated in the system was softened. Thus, without having to make the ion exchange resin filter cartridge 15 unduly large, and in particular if it is of a similar size to the activated carbon filter cartridge 16, the former may be due for replacement only twice as often the latter, for example every 3 months for a typical domestic installation with the activated carbon filter being due for replacement every 6 months. Of course, by making the ion exchange resin cartridge larger, it may be possible to equalise the filter lifetimes so that it will be appropriate to replace both cartridges 15, 16 at the same time.

Each of the water treatment units 7, 8 includes a hydraulically pressurizable canister 19 in which the respective cartridge is accommodated, and a holder 20 in which the respective water inlet 3, 5 and water outlet 4, 6 are provided. The upper ends of the canisters 19 are open and are detachably connected to the respective holders 20, for example by threaded connections, to facilitate periodic replacement of the enclosed cartridges 15, 16. Appropriate standard hydraulically integral mechanical seals (not shown) as known in the art are provided between the canisters 19 and the canister holders 20 as well as between the replaceable cartridges 15, 16 and canister holders 20. In accordance with the invention replacement of the cartridges is facilitated by isolation of the mains water supply by adjusting the valve of the flow control device 2 to the "off" position. Because the water treatment units 7, 8 are both isolated from the mains water supply by the flow control device 2 of the filtration system when the valve is adjusted to the "off" position, the canisters 19 can be disconnected from the canister holders 20 to permit replacement of the cartridges 15, 16 without need to close off the mains water supply at some location upstream of the filtration system.

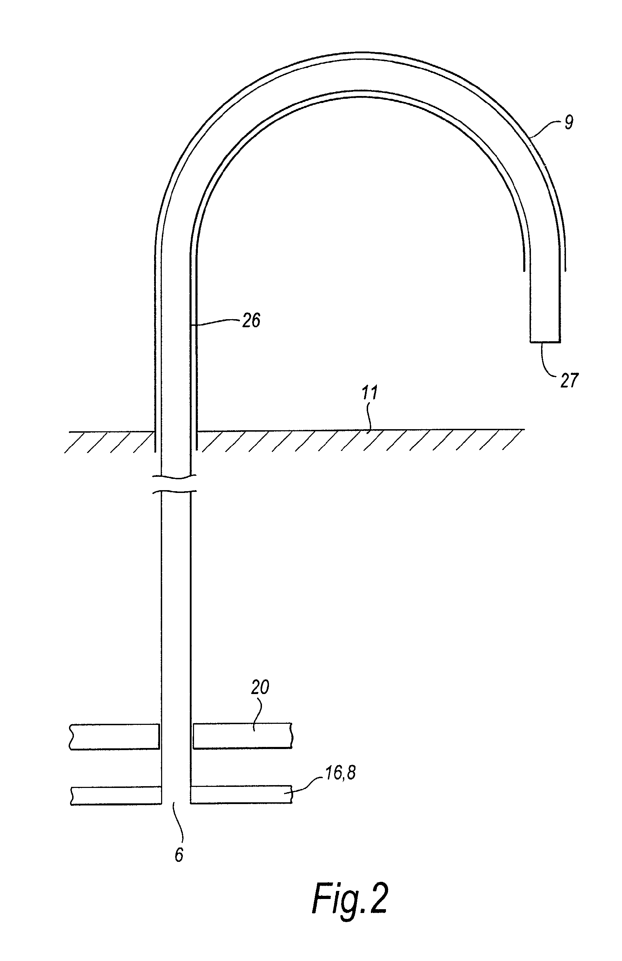

Fig. 2 shows an additional optional feature of the embodiment shown in Fig. 1 in which a disposable plastic tube 26 is provided in place of the water exit tube 8a. The tube 26 is integrally attached to the outlet port of the filter cartridge 16 included in the second water treatment unit 8, so that, in use, water flows through the plastic tube 26, which is replaced each time the filter cartridge 16 is replaced. In this embodiment spout 9 has a largely decorative aesthetic function of hiding the plastic tube 26 from view, although it does also serve to support and direct the discharge end of the tube 26. However, hydraulic integrity of the exit pipe and discharge spout construction is not required.

As part of this additional optional embodiment, plastic tube 26 may be integrally hydraulically sealed to water exit end cap 16b of filter cartridge 16, by mechanical means such as quick disconnect fittings, by appropriate adhesive, or by insert injection moulding. In order to further inhibit microbiological growth, in a still further embodiment the tubing 26 may be impregnated with a suitable chemical slow release agent. Because the plastic tube 26 is provided with each new filter cartridge 16, it is replaced regularly, thereby minimizing risks of biofilms collecting in the pipework through which the treated water is discharged.

In a still further additional optional embodiment for producing completely sterile drinking water, suitable for babies or persons with serious medical conditions, the modified embodiment of Figure 2 is used with a filter cartridge 16 containing a membrane film 22b and an activated carbon block 16a, and supplied sealed with water exit cap 16b having an integrally attached plastic tube 26 whose free end 27 has been sealed closed. Filter cartridge 16 is sterilized by any appropriate well known method, such as by heat or gamma sterilization. When cartridge 16 is inserted into the canister 19 of treatment unit 8, the tube 26 is passed through and extends past the end of the dispensing spout 9, so that a free end portion of the tube including the end seal protrudes from the spout and is cut off prior to use. In this way the sterility of the downstream portion of the filter is preserved during installation.

In an especially convenient construction the flow control device 2, the canister holders 20 and the interconnecting pipework are carried by a frame or bracket which is mountable on a vertical wall, e.g. in a cupboard space below the worktop. The canister holders 20 can be positioned to support the canisters 19 in a position inclined with respect to the vertical at an angle of 10° to 50° for presenting the lower ends of the canisters 19, such as in the direction of a cupboard door opening or away from an adjacent wall, to facilitate grasping of the canisters during cartridge replacement operations.

The water filtration system may be equipped with a timer device and indicator for signalling when it is time to replace the filter cartridges. A battery powered electronic timer may be provided to control LED (light emitting diode) indicators conveniently housed in the selector knob which is attached to the spindle 10 of the flow control device, and visible through a small window provided in this knob. According to one arrangement a green LED will flash intermittently until the recommended lifetime of the ion resin cartridge 15, for example 100 days for a domestic installation, is exceeded when a red LED is illuminated to alert the user of the system that it is time to replace the filters. The battery powering the warning device can be replaced when the filter cartridges are changed with the timer being reset automatically when the battery is changed, to start counting the next 100 days.

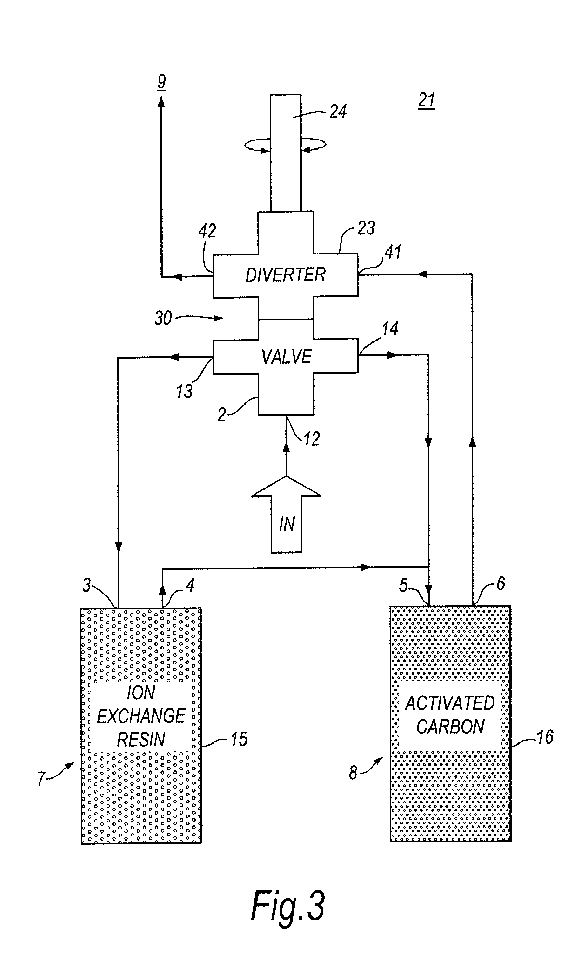

Fig. 3 shows a water filtration system 21 which is mostly the same as that described with reference to Figure 1, but differs in that the outlet 6 of the second water treatment unit 8 is connected to the water dispensing spout 9 through a shut off valve 23 operable in unison with the flow control device, so that the shut off valve 23 is opened when the flow control device is operated to open up communication between the water inlet 12 and one of the first and second outlets 13 and 14. The flow control device and the shut off valve 23 are conveniently provided by a common valve assembly 30 having a rotatable control shaft 24 for actuating the valves.

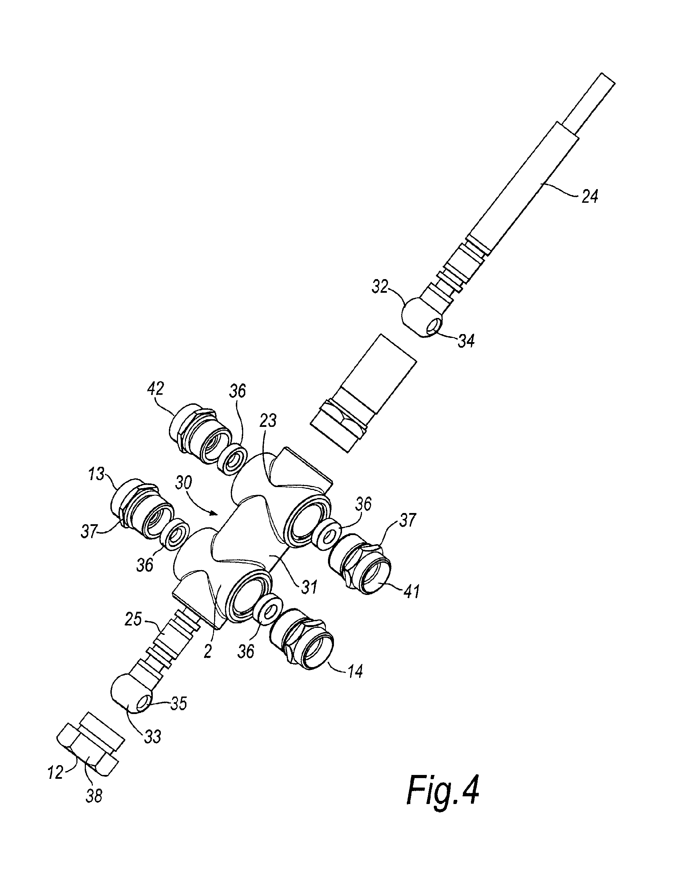

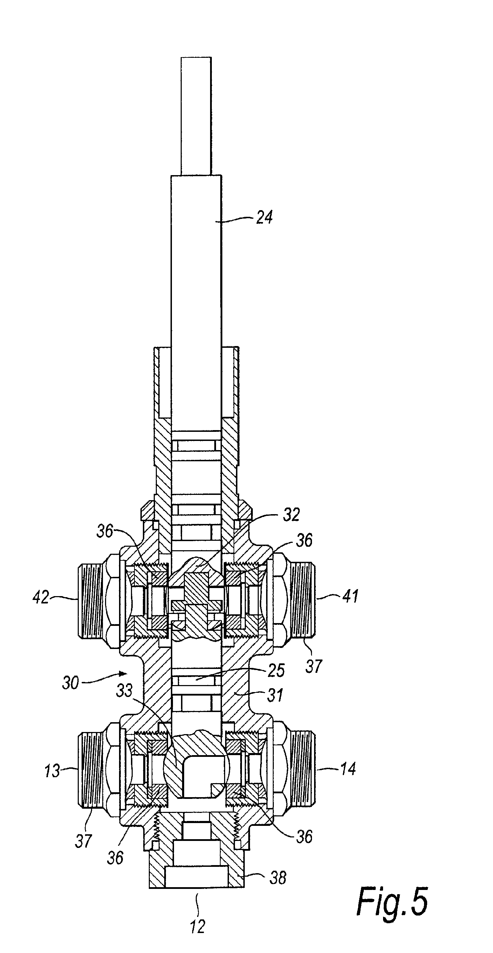

The valve assembly 30, which is illustrated in Figures 4 and 5, has a body 31 housing a shut off valve member 32 having a diametrical through opening 34, and a flow control valve member 33 in which there is an L shaped through passage 35. The valve member 32 is carried at the lower end of the spindle 24, and the valve member 33 is carried at the lower end of a spindle extension 25. The upper end of the spindle extension 25 has a non-circular shape and engages in a socket of corresponding configuration in the lower end of the spindle 24 so that the spindle 24 and the extension 25 rotate together when the valve is assembled. The valve body 31 has an axial opening at its lower end and two pairs of opposed side openings. In each of these side openings there is inserted a valve seat element 36 for cooperation with one of the valve members 32, 33 and held in place by a coupling member 37 which is screwed into the body opening and defines a valve port. A further coupling member 38 is screwed into the axial end opening of the body and defines the inlet port 12 of the flow control valve. By turning the spindle 24, the valve member 33 is rotatable through 90° in one direction, from the off position, to bring its through passage 35 to connect the inlet port to the first outlet port 13, and rotatable through 90° in the opposite direction to connect the inlet port 12 to the second outlet port 14, such rotation of the spindle 24 through 90° in either direction from the off position also bringing the valve member 32 to align its through passage 34 with the opposed inlet and outlet ports 41, 42 of the shut off valve. This valve arrangement has the advantage that when the flow control device is turned off, the water flow path from the carbon filter unit 8 to the dispensing spout 9 is closed off and as a result any tendency for water to continue to flow through the spout after the flow control device has been shut, due to air trapped and under pressure in the filter units, is averted.

In a modified embodiment of the valve assembly shown in Figures 4 and 5, the valve members 32, 33 are so arranged that when the operating spindle is rotated in the closing direction from either of the two fully open positions, there is a short delay between closure of the flow control device and the shut off of the shut off valve 23. This delay allows water in the system to be dispensed under the pressure of any trapped air in the filters, and reduces the residual pressure remaining in the system when both valves are closed.

## Claims

1. A domestic water filtration system comprising a flow control device (2) with an inlet (12) for connection to a mains water supply and first and second outlets (13, 14), a first water treatment unit (7) having an inlet (3) connected to the first outlet (13) of the flow control device, a second water treatment unit (8) having an inlet (5) connected to the second outlet (14) of the flow control device (2) and an outlet (6) for connection to a water dispensing means (9), the first water treatment unit (7) having an outlet (4) connected to deliver water to the second treatment unit (8), the flow device (2) having an "off" condition in which water is prevented from flowing to either the first or the second outlet, and the flow control device being selectively operable from the off condition to allow water from the mains supply to flow either to the first outlet (13) whereby water passes to the dispensing means (9) after flowing through both the first and second water treatment units (7, 8), or to the second outlet (14) whereby water passes to the dispensing means (9) after flowing through the second water treatment unit (8) but without flowing through the first treatment unit (7).

2. A domestic water filtration system according to claim 1, wherein each of the first and second water treatment units (7, 8) comprises a sealed canister (19) and a replaceable cartridge accommodated in the canister.

3. A domestic water filtration system according to claim 1, wherein the first water treatment unit (7) contains a replaceable water softener.

4. A domestic water filtration system according to claim 3, wherein the first water treatment unit (7) comprises a canister (19) and a replaceable cartridge (15) containing a water softener accommodated in the canister.

5. A domestic water filtration system according to claim 3 or 4, wherein the water softener comprises an ion exchange resin.

6. A domestic water filtration system according to claim 5, wherein a timer device and indicating means are provided for indicating when the ion exchange resin is due for replacement.

7. A domestic water filtration system according to claim 6, wherein the indicating means comprises a visible element housed in a control member of the flow control device (2).

8. A domestic water filtration system according to claim 1 or any one of claims 3 to 7, wherein the second water treatment unit (8) contains a replaceable activated carbon filter (16).

9. A domestic water filtration system according to claim 8, wherein the activated carbon filter is impregnated with an antibacterial compound.

10. A domestic water filtration system according to claim 8 or 9, wherein the second water treatment unit (8) includes a membrane filter (22b) and/or a depth filter (22a) on the upstream side of the activated carbon filter (16a).

11. A domestic water filtration system according to claim 8, 9 or 10, wherein the second water treatment unit (8) comprises a canister (19), and a replaceable filter cartridge (16) accommodated in the in the canister and comprising the activated carbon filter (16a) and, if present, the membrane (22b) and/or depth filter (22a).

12. A domestic water filtration system according to claim 11, wherein the filter cartridge comprises a carbon block (16a) and a membrane filter (22b) and/or depth filter (22a) wrapped around the carbon block.

13. A domestic water filtration system according to claim 11 or 12, wherein the filter cartridge is a sterilised cartridge which has been sterilised by heat or by gamma sterilisation.

14. A domestic water filtration system according to any one of claims 1 to 13, wherein a replaceable plastic tube (26) extends from the outlet (6) of the second water treatment unit (8) to the water dispensing means (9).

15. A domestic water filtration system according to claim 2, 11, 12 or 13, wherein the replaceable cartridge (16) of the second water treatment unit (8) has sealed thereto a plastic tube (26) through which the treated water is dispensed.

16. A domestic water filtration system according to claim 15, wherein the end (27) of the plastic tube (26) remote from the cartridge is initially sealed shut and is opened to permit discharge of water therethrough.

17. A domestic water filtration system according to claim 14, 15 or 16, wherein the dispensing means comprises a rigid pipe (9) through which the tube (26) extends, the tube (26) having a length sufficient to reach the end of the dispensing pipe (9) and being easily insertable through the dispensing pipe.

18. A domestic water filtration system according to any one of claims 14 to 17, wherein the plastic tube (26) is impregnated with a slow release substance which inhibits microbial growth

19. A domestic water filtration system according to any one of the preceding claims, wherein a flow restrictor (17) is provided at the inlet (3) to the first water treatment unit (7).

20. A domestic water filtration system according to claim 2, claim 4, or any one of claims 5 to 18 when dependent either directly or indirectly on claim 4, wherein the replaceable cartridge (15) included in the first water treatment unit (7) has an inlet including an integral flow restrictor (17).

21. A domestic water filtration system according to claim 19 or 20, wherein a mesh filter (18) is provided directly upstream of the flow restrictor (17).

22. A domestic water filtration system according to any one of claims 1 to 21, wherein the outlet (6) of the second water treatment unit (8) is connected to the water dispensing means (9) through a shut off valve (23) operable in unison with the flow control device (2), the shut off valve being arranged to be opened when the flow control device is operated to direct water to one of the first and second outlets (13, 14) and to be closed when the flow control device prevents flow of water to both the first and the second outlet.

23. A domestic water filtration system according to any one of claims 1 to 22, wherein the flow control device comprises a manually operable valve (2).

24. A domestic water filtration system according to claim 22 or 23, wherein the flow control device comprises a three way valve (2) for controlling flow of water to the first and second outlets (13, 14).

25. A domestic filtration system according to claim 24 wherein the valve (2) has a rotatable operating spindle (10).

26. A domestic water filtration system according to any one of claims 1 to 25, wherein the flow control device has a rotatable valve member having an off position and being rotatable in opposite directions from the off position for selectively directing water to the first outlet and to the second outlet.

27. A domestic water filtration system according to claim 22, wherein the flow control device (2) and the shut off valve (23) are provided by a common valve assembly having a rotatable control spindle (24) for actuating the valves.

28. A domestic water filtration system according to claim 27, wherein the shut off valve (23) is arranged to close shortly after the flow control device closes communication between the first or second outlet (13, 14) and the inlet (12) connected to the mains supply.

29. A domestic water filtration system according to any one of claims 1 to 28, wherein the water treatment units are mounted on a frame so as to be inclined to the vertical at an angle in the range of 10 to 50 degrees.

30. A domestic water filtration system according to any one of claims 1 to 29, wherein the flow control device (2) and the first and second water treatment units (7, 8) are carried on a frame, the water treatment units including replaceable cartridges (15, 16) accommodated in canisters (19), and the canisters being openable to permit replacement of the cartridges without requiring isolation from the mains water supply other than by that provided by the flow control device (2) being adjusted to the off condition.

31. A domestic water filtration system according to any one of the preceding claims wherein the first and second water treatment units (7, 8) contain respective replaceable cartridges (15, 16) having different predetermined water treatment capacities, the water treatment capacities being selected in accordance with the quality of the mains water to be treated and the predicted ratio of water volumes to flow through the respective water treatment units so that the replaceable cartridge (15) of the first water treatment unit (7) is due for replacement at intervals of not more than half the intervals at which the cartridge (16) of the second water treatment unit (8) is due for replacement.
